# EUROPEAN PATENT SPECIFICATION

(11) **EP 0 560 431 B1**
(45) Date of publication and mention of the grant of the patent: **08.12.1999**
(21) Application number: 93200600.0
(22) Date of filing: 03.03.1993
(51) Int. Cl.: A47J 37/12

(54) **Apparatus for heating a liquid medium**
Flüssigkeitserhitzer
Appareil pour chauffer un liquide

(30) Priority: 10.03.1992 AT 47192
(43) Date of publication of application: 15.09.1993
(73) Proprietor: Koninklijke Philips Electronics N.V., 5621 BA Eindhoven (NL)
(72) Inventor: Sonnek, Martin, c/o Int. Octrooibureau B.V., NL-5656 AA Einhoven (NL)
(74) Representative: Bos, Kornelis Sjoerd

(56) References cited:
- GB-A- 1 021 223
- US-A- 3 159 344

## Description

The invention relates to an apparatus for heating a liquid medium contained in a container supported on at least a part of the apparatus, which apparatus comprises an apparatus housing, a heating device for heating the medium, a power supply device for the controllable supply of power to the heating device which heating device and power supply device are fixedly arranged inside the apparatus housing, the heating device being arranged in the proximity of the container, and a temperature-sensor element disposed inside the container during operation of the apparatus to detect the temperature of the medium in the container, which temperature-sensor element is removable from the container and acts upon the power supply device to influence the power supply to the heating device depending on the detected temperature, the temperature-sensor element being accommodated in a sensor housing which is detachably connected to the apparatus housing, and a separable coupling device being provided between the temperature-sensor element and the power supply device accommodated in the apparatus housing, which coupling device is disengaged when the temperature-sensor element is removed from the container.

An apparatus of the type defined in the opening paragraph is known, for example from the document GB-A-1 021 223. In this known appliance the temperature-sensor element is detachably coupled to the power supply device by a direct coupling, *i.e.* by means of a coupling device comprising two pin-like plug contacts and two socket contacts mating with the two pin contacts. Such a direct coupling device is not splash-proof and is a disadvantage in view of electrical safety regulations.

It is an object of the invention to mitigate the above-mentioned problems in an apparatus of the type defined in the opening paragraph and to provide an improved apparatus, with which it is achieved in a simple manner that no risky situation arise as a result of water splashes or oil splashes and that no problems as regards the safety regulations arise.
To this end, according to the invention, an apparatus of the type defined in the opening paragraph is characterised in that an inductively operating separable coupling device is provided between the temperature-sensor element and the power supply device, and the temperature-sensor element is connected to a primary coil of the coupling device, which primary coil is accommodated in the sensor housing and cooperates inductively with a secondary coil of the coupling device to form the inductive coupling, which secondary coil is accommodated in the apparatus housing and is connected to the power supply device. In this way it is achieved that the temperature-sensor element and the primary coil combined with this element can be accommodated in the sensor housing in a hermetically sealed manner and the apparatus housing can also be of a hermetically sealed construction at the location of the secondary coil, so that the coupling device is splash-proof and, as a result of the inductive coupling and the resulting electrical isolation of the temperature-sensor element from a mains voltage, no problems with electrical safety regulations can arise. A further advantage of such an inductive coupling device is that the coupling thus obtained between the temperature-sensor element and the power supply device is independent of ohmic contact resistances.

With such an inductive coupling device it is found to be advantageous if the temperature-sensor element forms part of an electrical measurement circuit which is adapted to generate a measurement waveform whose frequency is variable in dependence upon the temperature of the medium to be heated, which temperature is detected by means of the temperature-sensor element, which measurement waveform is applied to the primary coil for inductive transmission to the secondary coil, and for the detection of the frequency of the measurement waveform there is provided a detector which follows the secondary coil and which in dependence upon the detected frequency of the measurement waveform influences the power supply from the power supply device to the heating device. This has the advantage that the parameter which is influenced by the temperature-sensor element, in the present case the frequency of the measurement waveform, is substantially independent of tolerances of the transmission path transmitting the measurement waveform between the measurement circuit including the temperature-sensor element and the detector for detecting the frequency of the measurement waveform. Another advantage is that the parameter which is influenced by the temperature-sensor element, *i.e.* the frequency of the measurement waveform, can be processed directly in a simple manner by means of a detector constructed in digital technology.

In this respect it is found to be particularly advantageous if the measurement circuit is accommodated wholly in the sensor housing, and the sensor housing accommodates an electric power storage means for the electric power supply to the measurement circuit. This has the advantage that the entire measurement circuit is situated inside the sensor housing which is detachable from the apparatus housing, so that the measurement circuit can be adjusted simply to a desired frequency range by means of a suitable adjusting device without the sensor housing which accommodates the measurement circuit having to be connected to the apparatus housing. Thus, such an adjustment is possible independently of the apparatus itself, which has the advantage that it simplifies adjustment.

In this respect it is found to be particularly advantageous if the power storage means accommodated in the sensor housing is constituted by a capacitor, the apparatus housing accommodates a generator, connected to the secondary coil, for generating a power-supply waveform which is transmitted to the primary coil *via* the secondary coil, which is inductively coupled to said primary coil, and a rectifier stage, connected to the capacitor, is connected to the primary coil and rectifies the power-supply waveform and supplies it to the capacitor for power storage. In this way it is achieved that no separate battery is required as a power storage means but that the power storage means is constituted by a simple capacitor, an additional advantage being that the secondary coil and the primary coil are used not only for transmitting the measurement waveform, which is generated by means of the measurement circuit and which is influenced in a temperature-dependent manner by the temperature-sensor element, but also for transmitting the power supply waveform generated by means of the generator provided in the apparatus.

The power supply waveform for the power storage capacitor may be situated in a frequency range which is adequately spaced from the frequency range of the measurement waveform of the measurement circuit, so that the interference between the power supply waveform and the measurement waveform is minimal owing to their different frequency ranges. However, it is found to be advantageous if the apparatus housing accommodates a control stage which generates a first time-window interval and a second time-window interval in cyclic succession, and during every first time-window interval the control stage activates the generator for the generation of the power-supply waveform and during every second time-window interval activates the detector for the detection of the frequency of the measurement waveform generated by the measurement circuit. This results in time-multiplexing of the waveforms to be transmitted in reciprocal directions, *i.e.* the measurement waveform and the power supply waveform, which substantially excludes an undesirable interaction of these waveforms.

With respect to the mechanical construction it is found to be advantageous if the sensor housing comprises a projecting tubular section made of a material having a satisfactory thermal conductivity, preferably aluminium, which tubular section is sealed at its free end and accommodates in its interior at the location of its free end a resistive element with a negative temperature coefficient as the temperature-sensor element, embedded in a thermally conductive paste provided in the tubular section. This guarantees a satisfactory thermal coupling between the medium to be heated and the temperature-sensor element and it ensures that the temperature of the medium to be heated is detected rapidly and accurately by the temperature-sensor element.

The invention will now be described in more detail on the basis of an embodiment shown in the drawings and given by way of non-limitative example.
Fig. 1 is a diagrammatical cross-sectional view showing a deep-frying apparatus comprising a temperature-sensor unit which is detachable from the apparatus and which projects into a container of the apparatus, an inductive coupling device being provided between this temperature-sensor unit and the apparatus.
Fig. 2 shows a part of the deep-frying apparatus of Fig. 1 to a larger scale than in Fig. 1, the construction of the inductive coupling device being clearly visible.
Fig. 3 is a highly simplified and partly schematic circuit diagram of a circuit arrangement of the deep-frying apparatus shown in Fig. 1.
Fig. 4 shows time diagrams of signals appearing in the circuit arrangement shown in Fig. 3.

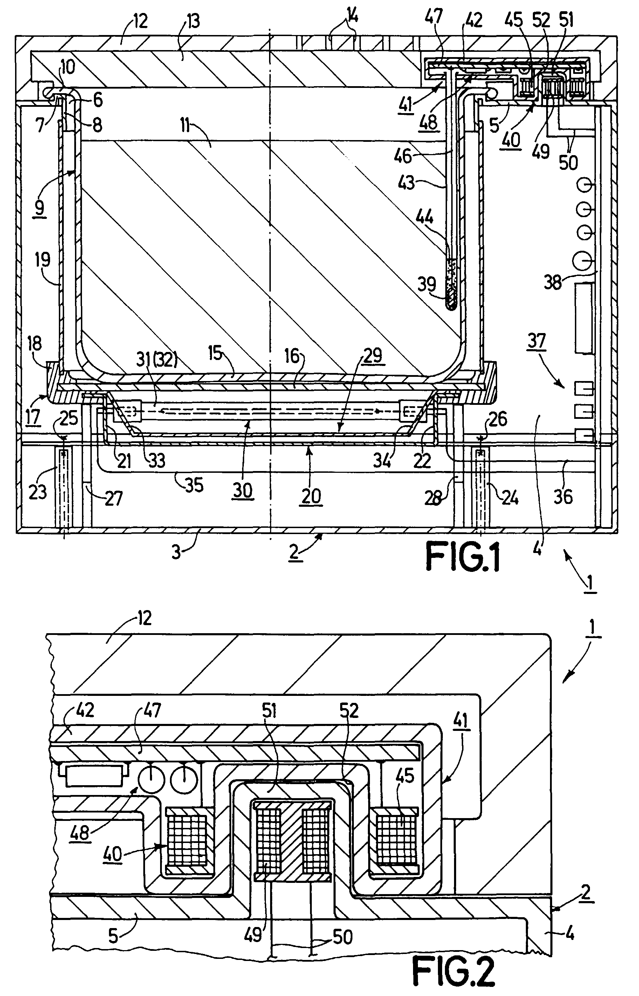

Fig. 1 shows a deep-frying apparatus 1 having an apparatus housing 2 which comprises a pot-shaped lower housing section 3 and a substantially hollow cylindrical upper housing section 4 mounted on the lower housing section 3 and connected thereto in a manner not shown. At its side which is remote from the lower housing section 3 the upper housing section 4 comprises an upper wall 5 formed with an opening 6. The opening 6 is bounded by an annular rim 7 which at its inner side changes to a short hollow cylindrical inner wall. The rim 7 supports a container 9 with an annular container rim 10, which container can be placed into and removed from the deep-frying apparatus 1. The container 9 serves for receiving a liquid medium 11 to be heated, for example oil. A frying basket, not shown, can be placed in the container and serves for holding a substance to be deep-fried. For closing the deep-frying apparatus 1 at the location of the opening 6 the apparatus comprises a lid 12 mounted on the upper housing section 4 and connected to the latter in a manner not shown. A filter 13 is arranged inside the lid 12 and serves for filtering the vapours which emanate from the container 9 and, after filtering by means of the filter 13, escape through slits 14 in the lid 12.

In the present deep-frying apparatus 1 the container 9 is additionally supported on a circular glass-ceramic plate 16 with its gently curved bottom wall 15. However, between the bottom wall 15 of the container 9 and the glass-ceramic plate 16 there may be a small clearance, which has no adverse effect on the correct operation of the deep-frying apparatus because in the present apparatus no mechanical contact is required between the bottom wall 15 and the glass-ceramic plate 16 in order to heat the liquid medium 11, since the heating device of the present apparatus, as will be described in detail hereinafter, comprises two halogen lamps for heating the liquid medium 11, whose radiation, also reaches the container 9 and the liquid medium 11 without mechanical contact.

The glass-ceramic plate 16 is supported by a two-part intermediate support 17 of a heat-resistant plastics. The intermediate support 17 has a ring-shaped portion 18 for holding a hollow cylindrical shield 19 whose end which faces the inner wall 8 of the upper housing section 4 surrounds the inner wall 8 and is thus fixed. The shield 19 provides protection against the heat emitted by the container 9. The intermediate support 17 cooperates with a sheet-metal main support 20 having two offset limbs 21 and 22 for holding the intermediate support 17. The main support 20, which is flat for the remainder, is mounted on posts 23 and 24, to which it is secured by means of diagrammatically shown screws 25 and 26. The posts 23 and 24 are integral with the lower housing section 3. The limbs 21 and 22 of the main support 20 hold the intermediate support 17 on further posts 27 and 28, which are also integral with the lower housing section 3.

A tray-shaped sheet-metal reflector 29 is arranged underneath the glass-ceramic plate 16 and is held against the glass-ceramic plate 16 from below by means of the intermediate support 17. The reflector 29 carries a heating device 30 of the deep-frying apparatus 1, which device in the present case comprises two halogen lamps 31 and 32, of which only one halogen lamp 31 is shown in Fig. 1. The two halogen lamps 31 and 32 serve for heating the liquid medium 11 in the container 9. The reflector 29 serves to reflect the radiation emitted by the two halogen lamps 31 and 32 towards the glass-ceramic plate 16 and thus towards the container 9 and the medium 11 to be heated in said container 9. At their ends the halogen lamps 31 and 32 extend through the inclined side walls 33 and 34 of the reflector 29 and are electrically connected to a power supply device 37 *via* connection wires, of which two connection wires 35 and 36 are shown in Fig. 1, said power supply device being arranged mainly on a printed circuit board 38 accommodated inside the apparatus housing 2. The power supply device 37, which will be described in detail hereinafter, is adapted to control the electrical power supply to the two halogen lamps 31 and 32 forming the heating device 30 of the deep-frying apparatus 1.

As is apparent from Fig. 1 and the above description both the heating device 30, which in the present case comprises the two halogen lamps 31 and 32, and the power supply device 37 are fixedly mounted inside the apparatus housing 2 of the deep-frying apparatus 1 and the heating device 30 is arranged in the proximity of the container 9, *i.e.* in the present case in the area of the bottom wall 15 of the container 9.

The deep-frying apparatus 1 further comprises a temperature-sensor element 39, which in the present case is formed by a resistive element with a negative temperature coefficient. During operation of the deep-frying apparatus 1 the temperature-sensor element 39 is situated inside the container 9 and detects the temperature of the liquid medium 11 in the container, said element suitably being removable from the container 9 in a very simple way. The temperature-sensor element 39 influences the power supply device 37 and controls the power supply to the heating device 30 depending on the detected temperature of the liquid medium 11, as will be described in detail hereinafter.

The present deep-frying apparatus 1 comprises a separable coupling device 40 between the temperature-sensor element 39 and the power supply device 37 in the apparatus housing 2, which coupling device is released when the temperature-sensor element 39 is removed from the container 9. The temperature-sensor element 39 is mounted in a sensor housing 41, which is detachably connected to the apparatus housing 2. The sensor housing 41 comprises a substantially rectangular two-part plastics housing section 42 and an aluminium tubular section 43 which projects from the housing section 42 and which has a sealed free end. The two parts of the housing section 42 and the tubular section 43 are hermetically sealed to one another. The temperature-sensor element 39 is arranged in the interior of the tubular section 43 at the location of the free end of the tubular section 43. The temperature-sensor element 39 is embedded in a thermally conductive paste 44 provided in the tubular section 43. By accommodating the temperature-sensor element in the aluminium tubular section 43 of the sensor housing 41 and by embedding the temperature-sensor element 39 in the thermally conductive paste 44 a satisfactory and fast heat transmission between the medium 11 to be heated and the temperature-sensor element 39 is guaranteed, so that the temperature-sensor element 39 always detects the temperature of the liquid medium 11 very rapidly and responds very rapidly to temperature variations of the liquid medium 11.

As is shown in Fig. 1 but even more clearly in Fig. 2, a separable coupling device 40, which operates inductively, is provided between the temperature-sensor element 39 and the power supply device 37. The temperature-sensor element 39 is connected to a primary coil 45 of the inductive coupling device 40, which coil is arranged in the sensor housing 41. The temperature-sensor element 39 is connected to conductor tracks of a printed circuit board 47 in the sensor housing 41 *via* an electrical connection formed by two wires, which board carries a measurement circuit 48 which includes the temperature-sensor element 39 and which is electrically connected to the primary coil 45. A circuit description of the measurement circuit 48 will be given hereinafter.

The separable inductive coupling device 40 further comprises a secondary coil 49 which is arranged in the apparatus housing 2 and is connected to conductor tracks of the printed circuit board 38 by means of two wires, the secondary coil 49 thus being connected to the power supply device 37.

As is shown in Figs. 1 and 2, the secondary coil 49 is mounted inside a cup-shaped portion 51 and is secured therein in a manner not shown. The cup-shaped portion 51 is situated at the location of the upper wall 5 of the upper housing section 4 and forms part of upper wall 5. When the sensor housing 41 is situated on the apparatus housing 2 the cup-shaped portion 51 engages a correspondingly shaped recess 52 in the housing section 42 of the sensor housing 41. The primary coil 45 is placed on the recess 52 of the housing section 42 inside the sensor housing 41 and is secured thereto in a manner not shown. The primary coil 45 and the secondary coil 49 of the inductive coupling device 40 are arranged in such a manner that the magnetic field generated by each of the two coils 45 and 49 passes through the other coil with a high efficiency, which guarantees an effective inductive coupling.

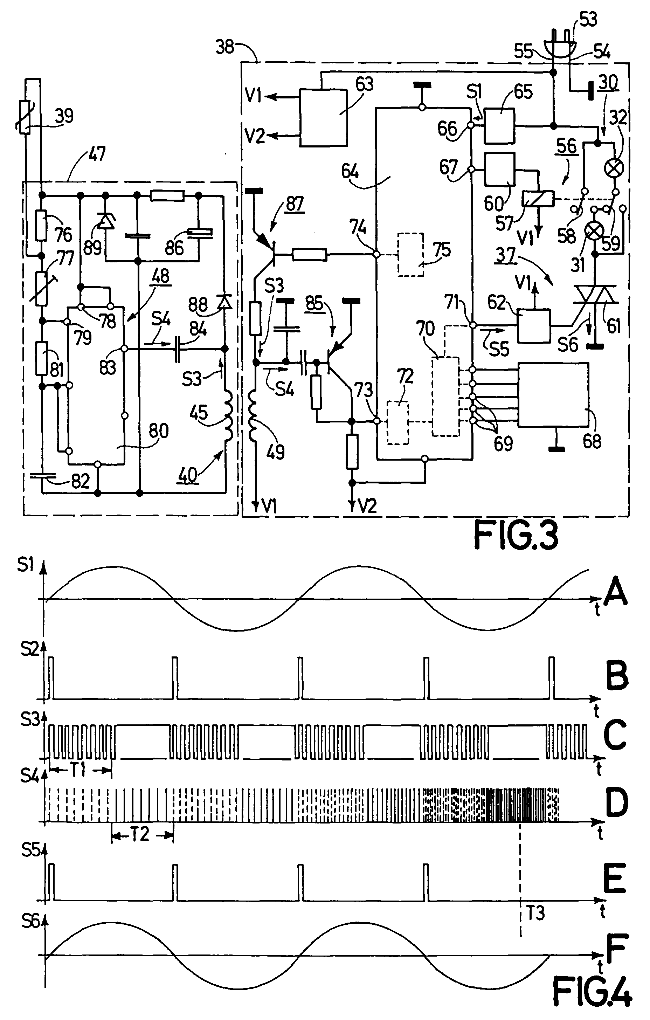

The circuit arrangement of the deep-frying apparatus 1 will now be described with reference to Fig. 3, which shows a schematic and simplified circuit diagram. The circuit diagram of Fig. 3 shows only those circuit elements of the apparatus shown in Fig. 1 which are relevant in the present context.

The printed circuit board 38 in the apparatus housing 2 and the printed circuit board 47 in the sensor housing 41 are shown diagrammatically in broken lines in Fig. 3. Fig. 3 further shows the separable inductive coupling device 40 comprising the primary coil 45, which is electrically connected to the printed circuit board 47, and the secondary coil 49, which is electrically connected to the printed circuit board 38.

Leads 54 and 55 from a mains plug 53 are connected to the printed circuit board 38, of which the lead 54 is connected to earth. The second lead 55 of the mains plug 53 is connected to the heating device 30 comprising the two halogen lamps 31 and 32. The halogen lamps 31 and 32 can be connected in series or parallel with one another by means of a switching device 56 comprising a relay 57 and two switches 58 and 59 which can be changed over by means of the relay, thus enabling the heating power to be changed in a simple manner. The relay 57 is controlled by means of a control stage 60, which in practice is constituted basically by a transistor amplifier stage.

A so-called triac 61 arranged in series with the two halogen lamps 31 and 32 constitutes an essential part of the power supply device 37 for the two halogen lamps 31 and 32 and serves to provide a controllable supply of electric power to the heating device 30 comprising the two halogen lamps 31 and 32. For controlling the triac 61 the power supply device 37 comprises a further control stage 62, which in practice is also constituted basically by a transistor amplifier stage.

The second lead 55 of the mains plug 53 is further connected to a rectifier circuit 63 supplying a first direct voltage V1 of, for example, 12 V and a second direct voltage of, for example, 5 V on two outputs.

The circuit on the printed circuit board 38 further comprises a microcontroller 64, which serves for performing a plurality of functions and tasks, to be described in more detail hereinafter. The microcontroller may be constituted by, for example, the microcontroller which is commercially available under the type designation MC 68HC05.

The second lead 55 of the mains plug 53 is also connected to a coupling stage 65, which in practice is basically constituted by a voltage divider circuit and *via* which an alternating voltage proportional to the a.c. mains voltage can be applied to an input 66 of the microcontroller 64. On the basis of the alternating voltage applied to the input 66 of the microcontroller 64 the microcontroller 64 detects the zero crossings of the a.c. mains voltage.

The microcontroller 64 further has an output 67 to which the control stage 60 for the relay 57 is connected. An enable signal, which enables the relay 57 to be energised, can be applied to the control stage *via* the output 67 of the microcontroller 64.

The circuit on the printed circuit board 38 further includes a nominal-temperature entry stage 68 comprising keys, not shown, for entering the desired nominal temperatures of the medium 11 to be heated and which supplies control signals corresponding to the entered nominal temperatures to the microcontroller *via* inputs 69 of this controller. By means of the microcontroller 64, as is shown diagrammatically in broken lines, a comparator 70 is formed which receives the control signals generated by the nominal-temperature entry stage 68 and corresponding to the desired nominal temperatures of the medium to be heated and a further control signal corresponding to the instantaneous actual temperature of the medium 11 to be heated. The comparator 70 formed by means of the microcontroller 64 controls the further control stage 62 *via* an output 71 of the microcontroller 64, by means of which further control stage the conduction of the triac 61 can be controlled, as will be explained hereinafter. The further control signal corresponding to the instantaneous actual temperature is generated by means of a detector 72, which is also formed by means of the microcontroller 64 and which is shown diagrammatically in broken lines, which detector receives a signal representative of the actual temperature of the medium to be heated *via* an input 73 of the microcontroller 64 and which is adapted to detect the presence of this signal and to detect the frequency of this signal.

It is to be noted that the microcontroller 64 has a further output 74 on which it supplies a squarewave signal generated by means of an internal squarewave generator 75, shown in dash-dot lines, which signal has a frequency of, for example, the order of magnitude of 1 to 2 Khz.

For generating the signal representing the actual temperature of the medium 11 to be heated the circuit of the present deep-frying apparatus 1 has the following features. As already stated, the deep-frying apparatus 1 has a temperature-sensor element 39 formed by a resistor having a negative temperature coefficient. The resistor 39 is arranged in parallel with a fixed resistor 767. A variable resistor 77 is connected in series with the parallel arrangement of the resistors 39 and 76. The resistor combination comprising the resistors 39, 76 and 77 is arranged between two terminals 78 and 79 of an integrated device 80 which is commercially available under the type designation ICM7555 and which concerns a so-called CMOS timer. The device 80, the resistor combination comprising the resistors 39, 76 and 77, another fixed resistor 81 and a capacitor 82 form an RC oscillator, which constitutes the afore-mentioned measurement circuit 48. The RC oscillator 48 can generate a measurement waveform whose frequency can be varied depending on the temperature detected by means of the resistor 39, *i.e.* the actual temperature of the medium to be heated, which waveform constitutes the signal representing the actual temperature. The RC oscillator 48 supplies the measurement waveform on an output 83 of the device 80. The measurement waveform is applied to the primary coil 45 of the inductive coupling device 40 *via* a capacitor 84 in order to be transferred inductively to the secondary coil 49 of the coupling device 40. From the secondary coil 49 the measurement waveform is applied to the input 73 of the microcontroller 64 *via* a transistor stage 85, which amplifies the measurement waveform, which is thus applied to the detector 72 realised by the microcontroller 64, which detector is adapted to detect the presence of the measurement waveform and to detect the frequency of this waveform, and which depending on the presence of the measurement waveform and the detected frequency of the measurement waveform influences the power supply from the power supply device 37 to the heating device 30, as will be described in detail hereinafter.

As can be seen in Figs. 1 and 2, the entire measurement circuit 48 formed by the RC oscillator is accommodated in the sensor housing 41. For the supply of electric power to the measurement circuit 48 the sensor housing 41 accommodates a power storage means 86 for electric power, which in the present case is formed very simply and advantageously by a capacitor. For supplying power to the power-storage capacitor 86 the following steps have been taken in the circuit. As stated, the microcontroller 64 is also utilised to form a squarewave generator 75, the microcontroller 64 supplying a squarewave signal on an output 74. This squarewave signal is applied to a further transistor stage 87 on the printed circuit board 38, which stage forms a generator for generating a power-supply waveform. The generator formed by the transistor stage 87 has its output connected directly to the secondary coil 49 of the inductive coupling device 40. In this way the power-supply waveform generated by the generator 87 is transmitted to primary coil 45 *via* the secondary coil 49, which coils are inductively coupled. Connected to the primary coil 45 is a rectifier stage 88 which comprises a single diode and which is connected to the capacitor 86. The rectifier stage 88 rectifies the power-supply waveform transmitted from the secondary coil 49 to the primary coil 45 and applies it to the power-storage capacitor 86. The voltage across the capacitor 86 is stabilised by means of a zener diode 89.

It is to be noted here that the microcontroller 64 also forms a control stage which generates a first time-window interval T1 and a second time-window interval T2 in cyclic succession. The microcontroller 64, which also forms the control stage, then activates the generator 87 during every first time-window interval T1 in order to generate the power-supply waveform in that the microcontroller 64 activates its internal squarewave generator 75 during every first time-window interval T1. The microcontroller 64, which also constitutes the control stage, further activates the internal detector 72 during every second time-window interval T2 in order to detect the presence and the frequency of the measurement waveform generated by the measurement circuit 48. These activating functions of the microcontroller 64 will be described in detail hereinafter.

The operation of the circuit arrangement shown in Fig. 3 will now be described with reference to the diagrams shown in Fig. 4. Diagram A in Fig. 4 shows the alternating voltage S1 which is proportional to the a.c. mains voltage and which is applied to the input 66 of the microcontroller 64. As already stated, the zero crossings in the signal S1 are detected internally in the microcontroller 64, as a result of which a signal S2 shown in diagram B of Fig. 4 is generated. As is shown, a short pulse is generated upon every detection of a zero crossing in the signal S1, which yields the pulse train S2.

As soon as a zero crossing is detected in the signal S1, *i.e.* in the a.c. mains voltage, the microcontroller 64 starts to generate a first time-window interval T1, whose length corresponds to substantially half the time interval between two zero crossings of the signal S1. During the first time-window interval T1 the internal squarewave generator 75 of the microcontroller is activated, as a result of which the generator 87 for generating the power-supply waveform is started, so that the generator supplies a power-supply waveform during every first time-window interval T1 and eventually the generator 87 supplies the signal S3 shown in the diagram C of Fig. 4 to the secondary coil 49. The signal S3 is transferred to the primary coil 45 by the secondary coil 49 and is subsequently rectified in the diode 88 and applied to the capacitor 86 for storage. Subsequently, the capacitor 86 provides the power supply to the measurement circuit 48 formed by the RC oscillator, *i.e.* also outside the first time-window intervals T1, which means in principle also in the second time-window intervals T2, in which no power-supply waveform is generated.

The energized RC oscillator 48 oscillates at a frequency which, depending on the instantaneous temperature of the medium 11, has a value in a frequency range of, for example, 10 kHz to 50 kHz. In a test apparatus the RC oscillator 48 has been dimensioned and tuned in such a manner that for an actual temperature of approximately 20 C of the medium 11 the measurement waveform had a value of approximately 10 kHz and for an actual medium temperature of approximately 200 C the measurement waveform had a value of just over 50 kHz. The measurement waveform which is continuously generated by the RC oscillator 48 is applied to the primary coil 45 *via* the capacitor 84 and is transferred to the input 73 of the microcontroller 64 *via* the transistor stage 85. However, the microcontroller 64, which also constitutes the control stage for the generation of the two time-window intervals T1 and T2, activates the internal detector 72 of the microcontroller only during every second time-window interval T2, which detector serves for the detection of the presence and the frequency of the measurement waveform generated by the measurement circuit, which waveform S4 is shown in the diagram D of Fig. 4. As is illustrated by means of different, *i.e.* broken and solid, lines in the diagram D of Fig. 4, the microcontroller 64 processes only those portions of the measurement waveform which appear within the second time-window intervals T2, said measurement waveform being generated continuously by the measurement circuit 48. The second time-window intervals T2 generated by the microcontroller 64 each have a length which also corresponds to substantially half the tune interval between two zero crossings of the signal S1. By means of the internal detector 72 of the microcontroller the presence and the instantaneous frequency of the measurement waveform S4 is detected, which frequency corresponds to the instantaneous temperature of the medium 11 to be heated. The result of the detection by means of the detector 72 is applied to the internal comparator 70 of the microcontroller. As long as the comparator 70 indicates that the detected frequency of the measurement waveform is below a specific nominal frequency, *i.e.* the detected actual temperature of the medium to be heated is still below a desired nominal temperature entered by means of the nominal-temperature entry stage 68, the comparator 70 supplies a control pulse corresponding to each zero crossing in the a.c. main voltage. This results in a control pulse train S5, as shown in the diagram E of Fig. 4. The control pulses of the control pulse train S5 are applied to the control stage 62, which subsequently turns on the triac 61 during each zero crossing of the a.c. mains voltage, as a result of which the a.c. mains voltage S6, as shown in the diagram F of Fig. 4, is applied to the heating device 30, *i.e.* to the two halogen lamps 31 and 32.

As is apparent from the diagram D in Fig. 4, the frequency of the measurement waveform S4 increases as the time elapses and in the present case it is assumed that at the instant T3, indicated by a broken line in the diagrams D and E of Fig. 4, the internal detector 72 of the microprocessor has detected a measurement waveform of such a frequency that the comparator 70 indicates that a desired nominal temperature of the medium 11 to be heated is reached. During the next zero crossing of the a.c. mains voltage this results in the comparator 70 no longer supplying a control pulse, so that the control stage 62 no longer turns on the triac 61. As a result of this, the halogen lamps 31 and 32 are no longer energized from the zero crossing of the a.c. mains voltage appearing after the instant T3, *i.e.* heating of the medium 11 is stopped.

Since the microcontroller 64 also ascertains the presence of a measurement waveform during every second time-window interval T2, *i.e.* during every detection time window, the advantage is obtained that, if the deep-frying apparatus has not been provided with a temperature-sensor element or temperature-sensor unit or the temperature-sensor element or temperature-sensor unit has been erroneously removed from the deep-frying apparatus during a heating cycle, the microcontroller 64 detects the absence of a measurement waveform in a time-window interval T2, upon which the microcontroller, which eventually controls the triac 61, stops the power supply to the heating device 30 comprising the halogen lamps 31 and 32. Thus, it is achieved by simple means using the microcontroller, which is present anyway, that the deep-frying apparatus cannot assume any undefined or hazardous operating conditions in the event of erroneous operation.

As a result of the provision of the separable coupling device between the temperature-sensor element or temperature-sensor unit and the power supply device or the circuit preceding the power supply device in the present deep-frying apparatus it is achieved in a particularly simple way that the temperature-sensor element including the temperature-sensor unit can be removed from the remainder of the deep-frying apparatus without any problems, so that after removal of the temperature-sensor element or temperature-sensor unit from the apparatus the container of the apparatus can be cleaned without being obstructed by the temperature-sensor element. Moreover, this also precludes damage to the temperature-sensor element or temperature-sensor unit because these parts can be kept in a safe place during cleaning. In addition, this also enables the temperature-sensor unit itself to be cleaned very simply and thoroughly. Since the temperature-sensor unit of the present deep-frying apparatus is very small and handy it can be handled conveniently and without any problem. As a result of the inductive construction of the coupling device it is also achieved that at the location of the coupling device both the temperature-sensor unit and the apparatus can be of a wholly imperforate construction, so that the electrically conductive parts of the apparatus cannot be exposed to splash water.

In the deep-frying apparatus described above the measurement circuit is constituted by an active RC oscillator. It is also possible to construct the measurement circuit as a passive resonant circuit whose frequency response can change depending on a temperature dependent variable of a temperature-sensor element. The deep-frying apparatus described above employs a microcontroller to realise a squarewave generator, a time-window generator, a detector for detecting the presence and the frequency of the measurement waveform and a comparator, but these devices may also be realised without a microcontroller by means of discrete elements.

## Claims

1. An apparatus (1) for heating a liquid medium contained in a container (9) supported on at least a part (7, 16) of the apparatus (1), which apparatus comprises an apparatus housing (2), a heating device (30) for heating the medium, a power supply device (37) for the controllable supply of power to the heating device (30) which heating device (30) and power supply device (37) are fixedly arranged inside the apparatus housing (2), the heating device (30) being arranged in the proximity of the container (9), a temperature-sensor element (39) disposed inside the container (9) during operation of the apparatus (1) to detect the temperature of the medium in the container (9), which temperature-sensor element is removable from the container (9) and acts upon the power supply device (37) to influence the power supply to the heating device (30) depending on the detected temperature, the temperature-sensor element (39) being accommodated in a sensor housing (41) which is detachably connected to the apparatus housing (2), and a separable coupling device (40) being provided between the temperature-sensor element (39) and the power supply device (37) accommodated in the apparatus housing (2), which coupling device is disengaged when the temperature-sensor element (39) is removed from the container (2), characterised in that an inductively operating separable coupling device (40) is provided between the temperature-sensor element (39) and the power supply device (37), and the temperature-sensor element (39) is connected to a primary coil (45) of the coupling device (40), which primary coil is accommodated in the sensor housing (41) and cooperates inductively with a secondary coil (49) of the coupling device (40) to form the inductive coupling, which secondary coil is accommodated in the apparatus housing (2) and is connected to the power supply device (37).

2. An apparatus (1) as claimed in Claim 1, characterised in that the temperature-sensor element (39) forms part of an electrical measurement circuit (48) which is adapted to generate a measurement waveform (S4) whose frequency is variable in dependence upon the temperature of the medium to be heated, which temperature is detected by means of the temperature-sensor element (39), which measurement waveform is applied to the primary coil (45) for inductive transmission to the secondary coil (49), and for the detection of the frequency of the measurement waveform (S4) there is provided a detector (72) which follows the secondary coil (49) and which in dependence upon the detected frequency of the measurement waveform (S4) influences the power supply from the power supply device (37) to the heating device (30).

3. An apparatus (1) as claimed in Claim 2, characterised in that the measurement circuit (48) is accommodated wholly in the sensor housing (41), and the sensor housing (41) accommodates an electric power storage means (86) for the electric power supply to the measurement circuit (48).

4. An apparatus (1) as claimed in Claim 3, characterised in that the power storage means (86) accommodated in the sensor housing (41) is constituted by a capacitor, the apparatus housing (2) accommodates a generator (75), connected to the secondary coil (49), for generating a power-supply waveform (S3) which is transmitted to the primary coil (45) *via* the secondary coil (49), which is inductively coupled to said primary coil, and a rectifier stage (88), connected to the, is connected to the primary coil (45) and rectifies the power-supply waveform (S3) and supplies it to the capacitor for power storage.

5. An apparatus as claimed in Claim 4, characterised in that the apparatus housing (2) accommodates a control stage (64) which generates a first time-window interval (T1) and a second time-window interval (T2) in cyclic succession, and during every first time-window interval (T1) the control stage (64) activates the generator (75) for the generation of the power-supply waveform (S3) and during every second time-window interval (T2) activates the detector (72) for the detection of the frequency of the measurement waveform (S4) generated by the measurement circuit (48).

6. An apparatus (1) as claimed in any one of the preceding Claims, characterised in that the sensor housing (41) comprises a projecting tubular section (43) made of a material having a satisfactory thermal conductivity, preferably aluminium, which tubular section is sealed at its free end and accommodates in its interior at the location of its free end a resistive element with a negative temperature coefficient as the temperature-sensor element (39), embedded in a thermally conductive paste (44) provided in the tubular section (43).

## Patentansprüche

1. Gerät (1) zum Erhitzen eines flüssigen Mediums, das in einem Behälter (9) enthalten ist, der sich auf mindestens einem Bereich (7, 16) des Gerätes abstützt, mit einem Gerätegehäuse (2) mit einer Heizeinrichtung (30) zum Erhitzen des Mediums, mit einer Energieversorgungseinrichtung (37) zum steuerbaren Zuführen von Energie zu der Heizeinrichtung (30), wobei diese Heizeinrichtung (30) und die Energieversorgungseinrichtung (37) fest innerhalb des Gerätegehäuses (2) vorgesehen sind und wobei die Heizeinrichtung (30) in der Nähe des Behälters (9) vorgesehen ist und mit einem Temperatursensorelement (39), das sich im Betrieb des Gerätes (1) innerhalb des Behälters (9) befindet und die Temperatur von dem im Behälter (9) enthaltenen Medium detektiert und das aus dem Behälter (9) entfernbar ist und das auf die Energieversorgungseinrichtung (37) einwirkt und deren Energiezufuhr zu der Heizeinrichtung (30) in Abhängigkeit von der detektierten Temperatur beeinflusst, wobei das Temperatursensorelement (39) in einem Sensorgehäuse (41) untergebracht ist, das entfernbar an dem Gerätegehäuse (2) befestigt ist, und wobei eine entfernbare Koppeleinrichtung (40) zwischen dem Temperatursensorelement (39) und der in dem Gerätegehäuse (2) angeordneten Energieversorgungseinrichtung (37) vorgesehen ist, wobei diese Koppeleinrichtung gesperrt wird, wenn das Temperatursensorelement (39) aus dem Behälter (2) entfernt wird, dadurch gekennzeichnet, dass zwischen dem Temperatursensorelement (39) und der Energieversorgungseinrichtung (37) eine auf induktive Weise wirksame trennbare Koppeleinrichtung (40) vorgesehen ist und das Temperatursensorelement (39) mit einer in dem Sensorgehäuse (41) untergebrachten Primärspule (45) der Koppeleinrichtung (40) zusammengeschaltet ist, die zur Bildung der induktiven Koppelung mit einer im Gerätegehäuse (2) untergebrachten Sekundärspule (49) der Koppeleinrichtung (40) induktiv zusammenwirkt, die mit der Energieversorgungseinrichtung (37) zusammengeschaltet ist.

2. Gerät (1) nach Anspruch 1, dadurch gekennzeichnet, dass das Temperatursensorelement (39) einen Teil eines elektrischen Messkreises (48) bildet, mit dem eine Messschwingung (S4) generierbar ist, deren Frequenz in Abhängigkeit von der mit dem Temperatursensorelement (39) festgestellten Temperatur des zu erhitzenden Mediums veränderbar ist und die der Primärspule (45) zur induktiven Übertragung zur Sekundärspule (49) zugeführt wird, und zur Detektion der Frequenz der Messschwingung (S4) ein der Sekundärspule (49) nachgeschalteter Detektor (72) vorgesehen ist, der in Abhängigkeit von der detektierten Frequenz der Messschwingung (S4) die Energiezufuhr von der Energieversorgungseinrichtung (37) zu der Heizeinrichtung (30) beeinflusst.

3. Gerät (1) nach Anspruch 1 oder 2, dadurch gekennzeichnet, dass der Messkreis (48) völlig in dem Sensorgehäuse (41) untergebracht ist, und das Sensorgehäuse (41) ein elektrisches Leistungsspeichermittel (86) aufweist zur elektrischen Energieversorgung des Messkreises (48).

4. Gerät (1) nach Anspruch 3, dadurch gekennzeichnet, der in dem Sensorgehäuse (41) untergebrachte Energiespeicher (86) durch einen Kondensator gebildet ist und dass in dem Gerätegehäuse ein mit der Sekundärspule (49) verbundener Generator (75) zur Erzeugung einer Energieversorgungsschwingung (S3) vorgesehen ist, die über die Sekundärspule (49) zu der mit dieser induktiv gekoppelten Primärspule (45) übertragen wird, und dass an die Primärspule (45) eine Gleichrichterstufe (88) angeschaltet ist, die mit dem Kondensator verbunden ist und welche die Energieversorgungsschwingung (S3) gleichrichtet und dem Kondensator zur Energiespeicherung zuführt.

5. Gerät nach Anspruch 4, dadurch gekennzeichnet, dass im Gerätegehäuse (2) eine Steuerstufe (64) vorgesehen ist, die zyklisch aufeinanderfolgend eine erste Zeitfensterperiode (T1) und eine zweite Zeitfensterperiode (T2) generiert, und dass die Steuerstufe (64) während jeder ersten Zeitfensterperiode (T1) den Generator (75) zur Erzeugung der Energieversorgungsschwingung (S3) aktiviert und während jeder zweiten Zeitfensterperiode (T2) den Detektor (72) zur Detektion der Frequenz der mit dem Messkreis (48) generierten Messschwingung (S4) aktiviert.

6. Gerät (1) nach einem der vorhergehenden Ansprüche, dadurch gekennzeichnet, dass Sensorgehäuse (41) einen abstehenden, aus einem gut wärmeleitfähigen Material, vorzugsweise Aluminium, bestehenden, an seinem freien Ende dicht abgeschlossenen Rohrteil (43) aufweist, in dessen Innerem im Bereich des freien Endes als Temperatursensorelement (39) ein Widerstandselement mit einem negativen Temperaturkoeffizienten vorgesehen ist, das in eine von dem Rohrteil (43) umschlossene Wärmeleitpaste (44) eingebettet ist.

## Revendications

1. Appareil (1) pour chauffer un milieu liquide contenu dans un récipient (9) supporté sur au moins une partie (7, 16) de l'appareil (1), lequel appareil comprend un habillage (2), un dispositif de chauffage (30) pour chauffer le milieu, un dispositif d'alimentation électrique (37) pour l'alimentation contrôlable du dispositif de chauffage (30) en électricité, lesquels dispositif de chauffage (30) et dispositif d'alimentation électrique (37) sont montés fixes à l'intérieur de l'habillage (2), le dispositif de chauffage (30) étant agencé à proximité du récipient (9), et un élément de capteur sensible à la température (39) disposé à l'intérieur du récipient (9) pendant le fonctionnement de l'appareil (1) pour détecter la température du milieu dans le récipient (9), lequel élément de capteur sensible à la température peut être retiré du récipient (9) et agit sur le dispositif d'alimentation électrique (37) pour influencer l'alimentation du dispositif de chauffage (30) en fonction de la température détectée, l'élément de capteur sensible à la température (39) étant logé dans un boîtier de capteur (41) qui peut être relié au habillage (2) de manière détachable, un dispositif de couplage séparable (40) étant prévu entre l'élément de capteur sensible à la température (39) et le dispositif d'alimentation électrique (37) logé dans l'habillage de l'appareil (2), lequel dispositif de couplage est libéré lorsque l'élément de capteur sensible à la température (39) est retiré du récipient (2), caractérisé en ce qu'un dispositif de couplage séparable fonctionnant de manière inductive (40) est prévu entre l'élément de capteur sensible à la température (39) et le dispositif d'alimentation électrique (37) ,et l'élément de capteur sensible à la température (39) est connecté à un enroulement primaire (45) du dispositif de couplage (40), lequel enroulement primaire est logé dans le boîtier de capteur (41) et coopère de manière inductive avec un deuxième enroulement (49) du dispositif de couplage (40) pour former le couplage inductif, lequel enroulement secondaire est logé dans l'habillage (2) et est relié au dispositif d'alimentation électrique (37).

2. Appareil (1) suivant la revendication 1, caractérisé en ce que l'élément de capteur sensible à la température (39) fait partie d'un circuit de mesure électrique (48) qui est à même de produire une forme d'onde de mesure (S4) dont la fréquence varie en fonction de la température du milieu à chauffer, qui est détectée au moyen de l'élément de capteur sensible à la température (39), laquelle forme d'onde de mesure est appliquée à l'enroulement primaire (45) en vue d'une transmission inductive à l'enroulement secondaire (49), et en ce que, pour la détection de la fréquence de la forme d'onde de mesure (S4), il est prévu un détecteur (72) qui suit l'enroulement secondaire (49) et qui, en fonction de la fréquence détectée de la forme d'onde de mesure (S4), influence l'alimentation du dispositif d'alimentation électrique (37) du dispositif de chauffage (30).

3. Appareil (1) suivant la revendication 2, caractérisé en ce que le circuit de mesure (48) est entièrement logé dans le boîtier de capteur (41) et que le boîtier de capteur (41) contient un moyen accumulateur d'énergie électrique (86) pour l'alimentation électrique du circuit de mesure (48).

4. Appareil (1) suivant la revendication 3, caractérisé en ce que le moyen accumulateur d'énergie (86) logé dans le boîtier de capteur (41) est constitué par un condensateur, en ce que l'habillage (2) contient un générateur (75), connecté à l'enroulement secondaire (49), pour produire une forme d'onde d'alimentation (S3) qui est transmise à l'enroulement primaire (45) par l'intermédiaire de l'enroulement secondaire (49), qui est couplé de manière inductive audit enroulement primaire, et en ce qu'un étage redresseur (88), connecté au condensateur, est connecté à l'enroulement primaire (45) et redresse la forme d'onde d'alimentation (S3) et la fournit au condensateur pour accumulation.

5. Appareil (1) suivant la revendication 4, caractérisé en ce que l'habillage (2) contient un étage de commande (64) qui produit un premier intervalle de fenêtres temporelles (T1) et un deuxième intervalle de fenêtres temporelles (T2) selon une succession cyclique, et que, pendant chaque premier intervalle de fenêtres temporelles (T1), l'étage de commande (64) active le générateur (75) pour la production de la forme d'onde d'alimentation (S3) et que, pendant chaque deuxième intervalle de fenêtres temporelles (T2), il active le détecteur (72) pour la détection de la fréquence de la forme d'onde de mesure (S4) produite par le circuit de mesure (48).

6. Appareil (1) suivant l'une quelconque des revendications précédentes, caractérisé en ce que le boîtier de capteur (41) comprend une section tubulaire saillante (43) faite en un matériau présentant une conductivité thermique satisfaisante, de préférence l'aluminium, laquelle section tubulaire est scellée à son extrémité libre et reçoit intérieurement, au niveau de son extrémité libre, un élément résistif présentant un coefficient de température négatif comme élément de capteur sensible à la température (39), intégré dans une pâte conductrice de la chaleur (44) prévue dans la section tubulaire (43).
